# EUROPEAN PATENT APPLICATION

(11) **EP 2 759 690 A1**
(43) Date of publication of application: **30.07.2014**
(21) Application number: 11872855.9
(22) Date of filing: 21.09.2011
(51) Int. Cl.: F02D 17/00, F02D 29/02

(54) **VEHICLE AND METHOD FOR CONTROLLING VEHICLE**

(71) Applicant: TOYOTA JIDOSHA KABUSHIKI KAISHA, Toyota-shi, Aichi-ken, 471-8571 (JP)
(72) Inventor: KAMIJO, Yusuke, Toyota-shi, Aichi-ken, 471-8571 (JP)
(74) Representative: Winter, Brandl, Fürniss, Hübner, Röss, Kaiser, Polte - Partnerschaft
(86) International application number: PCT/JP2011/071435
(87) International publication number: WO 2013/042217

(57) **Abstract**

An ECU executes a program including: a step (S106) of executing start control of an engine (10) when a stop operation of the engine is in execution (YES in S100), when a restart request is made (YES in S102) and when an engine rotation speed is outside a predetermined range (YES in S104); and a step (S108) of continuing the stop operation of the engine (10) when the restart request is not made (NO in S102) or when the engine rotation speed is within the predetermined range (NO in S104).

## Description

### TECHNICAL FIELD

The present invention relates to control when restart of an engine is requested.

### BACKGROUND ART

Japanese Patent Laying-Open No. 2008-267297 (PTD 1), for example, discloses that an engine is restarted by a starter to prevent an engine stall, when an engine restart condition is satisfied during engine stop control and when an engine rotation speed becomes lower than a prescribed value.

### CITATION LIST

### PATENT DOCUMENT

PTD 1: Japanese Patent Laying-Open No. 2008-267297

### SUMMARY OF INVENTION

### TECHNICAL PROBLEM

However, there is a problem that, when the engine is restarted and when the engine rotation speed is within a resonance occurrence region of a drive device for a vehicle, vibrations produced by resonance are transmitted to an occupant of the vehicle at the time of beginning start of the engine.

An object of the present invention is to provide a vehicle and a control method for a vehicle, which suppress transmission of vibrations produced by resonance to the driver at the time of restarting an engine.

### SOLUTION TO PROBLEM

A vehicle according to an aspect of the present invention includes: a drive device including an engine; and a control device for executing a start operation of the engine. The control device prevents restart of the engine when a restart request for restarting the engine is made during a stop operation of the engine and when a rotation speed of the engine is within a predetermined range based on a resonance occurrence region of the drive device, and the control device executes the start operation when the restart request is made during the stop operation and when the rotation speed is outside the predetermined range.

Preferably, the predetermined range is a range formed by moving at least one of an upper limit value and a lower limit value of the resonance occurrence region in a direction of increase in the rotation speed by a predetermined amount.

More preferably, the predetermined amount is an amount defined in consideration of a response delay time from when the start operation is begun to when decrease in the rotation speed is suppressed.

More preferably, the vehicle further includes a rotating electric machine for starting the engine. The control device executes the start operation by cranking the engine using the rotating electric machine, when the restart request is made during the stop operation and when the rotation speed is outside the predetermined range.

More preferably, the engine is provided with a fuel injection device. The control device executes the start operation by controlling the fuel injection device to resume fuel injection, when the restart request is made during the stop operation and when the rotation speed is outside the predetermined range.

More preferably, the vehicle further includes: a first rotating electric machine; a second rotating electric machine coupled to a driving wheel; and a power transmission device mechanically coupling three elements, which are an output shaft of the engine, a first rotation shaft of the first rotating electric machine and a second rotation shaft of the second rotating electric machine, the power transmission device utilizing any one of the three elements as a reaction force element, thereby allowing for transmission of motive power between the other two elements.

More preferably, the power transmission device is a planetary gear mechanism having a sun gear, a pinion gear, a carrier, and a ring gear. The sun gear is coupled to the first rotation shaft. The carrier is coupled to the output shaft of the engine. The ring gear is coupled to the second rotation shaft.

A control method for a vehicle according to another aspect of the present invention is a control method for a vehicle, used in a vehicle on which a drive device including an engine is mounted. The control method for a vehicle includes the steps of: preventing restart of the engine when a restart request for restarting the engine is made during a stop operation of the engine and when a rotation speed of the engine is within a predetermined range based on a resonance occurrence region of the drive device; and executing a start operation of the engine when the restart request is made during the stop operation and when the rotation speed is outside the predetermined range.

### ADVANTAGEOUS EFFECTS OF INVENTION

According to the present invention, restart of the engine is prevented when a restart request for restarting the engine is made during a stop operation of the engine and when a rotation speed of the engine is within a predetermined range based on a resonance occurrence region of the drive device, and the start operation is executed when the restart request is made during the stop operation and when the rotation speed is outside the predetermined range. As a result, production of vibrations caused by resonance can be suppressed at the time of restarting the engine. Therefore, there can be provided a vehicle and a control method for a vehicle, which suppress transmission of vibrations produced by resonance to the driver at the time of restarting an engine.

### BRIEF DESCRIPTION OF DRAWINGS

Fig. 1 is an overall block diagram of a vehicle according to the present embodiment.
Fig. 2 is a functional block diagram of an ECU mounted on the vehicle according to the present embodiment.
Fig. 3 is a diagram showing a relationship between an engine rotation speed and the degree of shock that occurs at the time of start.
Fig. 4 is a flowchart showing a control structure of a program executed by the ECU mounted on the vehicle according to the present embodiment.
Fig. 5 is a timing chart for describing the operation of the ECU mounted on the vehicle according to the present embodiment.

### DESCRIPTION OF EMBODIMENTS

An embodiment of the present invention will be described hereinafter with reference to the drawings. In the following description, the same components are denoted by the same reference characters. Their names and functions are also the same. Therefore, detailed description about them will not be repeated.

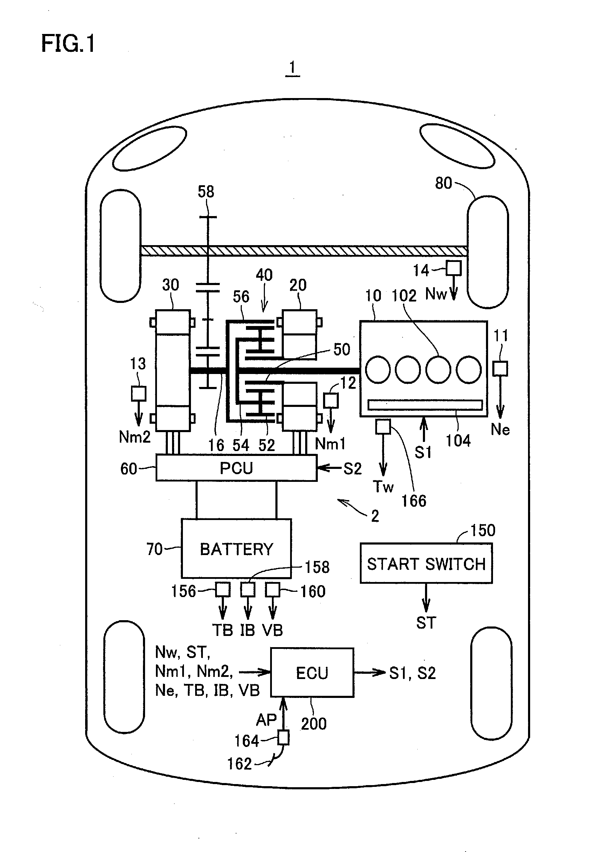

An overall block diagram of a vehicle 1 according to the present embodiment will be described with reference to Fig. 1. Vehicle 1 includes a drive device 2, a start switch 150, and an ECU (Electronic Control Unit) 200.

Drive device 2 includes an engine 10, a drive shaft 16, a first motor generator (hereinafter referred to as "first MG") 20, a second motor generator (hereinafter referred to as "second MG") 30, a power split device 40, a speed reducer 58, a PCU (Power Control Unit) 60, a battery 70, and a driving wheel 80.

This vehicle 1 travels by using driving power outputted from at least one of engine 10 and second MG 30. Motive power generated by engine 10 is divided into two paths by power split device 40. One of the two paths is a path for transmitting the motive power to driving wheel 80 via speed reducer 58. The other is a path for transmitting the motive power to first MG 20.

Each of first MG 20 and second MG 30 is, for example, a three-phase AC rotating electric machine. First MG 20 and second MG 30 are driven by PCU 60.

First MG 20 functions as a generator that generates electric power by using the motive power of engine 10 divided by power split device 40 and transmits the electric power via PCU 60 to charge battery 70. First MG 20 also receives electric power from battery 70 and rotates a crankshaft that is an output shaft of engine 10. As a result, first MG 20 functions as a starter that starts engine 10.

Second MG 30 functions as a motor for driving that provides driving power to driving wheel 80 by using at least one of the electric power stored in battery 70 and the electric power generated by first MG 20. Second MG 30 also functions as a generator that transmits electric power generated by regenerative braking via PCU 60 to charge battery 70.

Engine 10 is, for example, an internal combustion engine such as a gasoline engine and a diesel engine. Engine 10 includes a plurality of cylinders 102 and a fuel injection device 104 that supplies fuel to each of the plurality of cylinders 102. Based on a control signal S1 from ECU 200, fuel injection device 104 injects an appropriate amount of fuel to each cylinder at an appropriate time, or stops injection of the fuel to each cylinder.

Furthermore, engine 10 is provided with an engine rotation speed sensor 11 for detecting a rotation speed (hereinafter referred to as "engine rotation speed") Ne of the crankshaft of engine 10. Engine rotation speed sensor 11 transmits a signal indicating detected engine rotation speed Ne to ECU 200.

Furthermore, engine 10 is provided with a water temperature sensor 166. Water temperature sensor 166 detects a temperature (in the following description, referred to as "cooling water temperature") Tw of a cooling medium flowing through engine 10. Water temperature sensor 166 transmits detected cooling water temperature Tw to ECU 200.

Power split device 40 mechanically couples three elements for rotating driving wheel 80, which are drive shaft 16, the output shaft of engine 10 and a rotation shaft of first MG 20. By utilizing any one of the aforementioned three elements as a reaction force element, power split device 40 allows for transmission of motive power between the other two elements. A rotation shaft of second MG 30 is coupled to drive shaft 16.

Power split device 40 is a planetary gear mechanism including a sun gear 50, a pinion gear 52, a carrier 54, and a ring gear 56. Pinion gear 52 engages with each of sun gear 50 and ring gear 56. Carrier 54 supports pinion gear 52 to allow rotation and is coupled to the crankshaft of engine 10. Sun gear 50 is coupled to the rotation shaft of first MG 20. Ring gear 56 is coupled to the rotation shaft of second MG 30 and speed reducer 58 by drive shaft 16.

Speed reducer 58 transmits the motive power from power split device 40 and second MG 30, to driving wheel 80. Speed reducer 58 also transmits reaction force received from a road surface by driving wheel 80, to power split device 40 and second MG 30.

PCU 60 converts DC power stored in battery 70 into AC power for driving first MG 20 and second MG 30. PCU 60 includes a converter and an inverter (both are not shown) controlled based on a control signal S2 from ECU 200. The converter boosts a voltage of the DC power received from battery 70, and outputs the power to the inverter. The inverter converts the DC power outputted by the converter into AC power, and outputs the AC power to first MG 20 and/or second MG 30. As a result, first MG 20 and/or second MG 30 is/are driven by using the electric power stored in battery 70. The inverter also converts AC power generated by first MG 20 and/or second MG 30 into DC power, and outputs the DC power to the converter. The converter steps down a voltage of the DC power outputted by the inverter, and outputs the power to battery 70. As a result, battery 70 is charged by using the electric power generated by first MG 20 and/or second MG 30. The converter may be omitted.

Battery 70 is a power storage device and is a rechargeable DC power supply. A secondary battery such as a nickel-metal hydride battery and a lithium ion battery is, for example, used as battery 70. A voltage of battery 70 is, for example, approximately 200 V. Battery 70 may be charged by using the electric power generated by first MG 20 and/or second MG 30 as described above, and in addition, may be charged by using electric power supplied from an external power supply (not shown). Battery 70 is not limited to the secondary battery, and may be the one that can generate a DC voltage, such as a capacitor, a solar cell and a fuel cell, for example.

Battery 70 is provided with a battery temperature sensor 156 for detecting a battery temperature TB of battery 70, a current sensor 158 for detecting a current IB of battery 70, and a voltage sensor 160 for detecting a voltage VB of battery 70.

Battery temperature sensor 156 transmits a signal indicating battery temperature TB to ECU 200. Current sensor 158 transmits a signal indicating current IB to ECU 200. Voltage sensor 160 transmits a signal indicating voltage VB to ECU 200.

Start switch 150 is, for example, a push-type switch. Start switch 150 may be the one that a key is inserted into a key cylinder and is rotated to a prescribed position. Start switch 150 is connected to ECU 200. In accordance with the driver's operation of start switch 150, start switch 150 transmits a signal ST to ECU 200.

For example, upon receiving signal ST when a system of vehicle 1 is in the stop state, ECU 200 determines that a startup command has been received and causes the system of vehicle 1 to shift from the stop state to the startup state. Upon receiving signal ST when the system of vehicle 1 is in the startup state, ECU 200 determines that a stop command has been received and causes the system of vehicle 1 to shift from the startup state to the stop state. In the following description, the driver's operation of start switch 150 when the system of vehicle 1 is in the startup state will be referred to as "IG OFF operation", and the driver's operation of start switch 150 when the system of vehicle 1 is in the stop state will be referred to as "IG ON operation". When the system of vehicle 1 shifts to the startup state, electric power is supplied to a plurality of devices that are required for traveling of vehicle 1 and the plurality of devices enter an actuatable state. On the other hand, when the system of vehicle 1 shifts to the stop state, supply of electric power to a part of the plurality of devices that are required for traveling of vehicle 1 is stopped and a part of the devices enter an actuation stop state.

An accelerator pedal 162 is provided at the driver's seat. Accelerator pedal 162 is provided with a pedal stroke sensor 164. Pedal stroke sensor 164 detects an amount of stroke AP of accelerator pedal 162. Pedal stroke sensor 164 transmits a signal indicating amount of stroke AP to ECU 200. Instead of pedal stroke sensor 164, an accelerator pedal pressing force sensor for detecting the force on accelerator pedal 162 pressed by the occupant may be used.

A first resolver 12 detects a rotation speed Nm1 of first MG 20. First resolver 12 transmits a signal indicating detected rotation speed Nm1 to ECU 200. A second resolver 13 detects a rotation speed Nm2 of second MG 30. Second resolver 13 transmits a signal indicating detected rotation speed Nm2 to ECU 200.

A wheel speed sensor 14 detects a rotation speed Nw of driving wheel 80. Wheel speed sensor 14 transmits a signal indicating detected rotation speed Nw to ECU 200. ECU 200 calculates a vehicle speed V based on received rotation speed Nw. Instead of rotation speed Nw, ECU 200 may calculate vehicle speed V based on rotation speed Nm2 of second MG 30.

ECU 200 generates control signal S1 for controlling engine 10, and outputs generated control signal S1 to engine 10. ECU 200 also generates control signal S2 for controlling PCU 60, and outputs generated control signal S2 to PCU 60.

ECU 200 controls engine 10, PCU 60 and the like, and thereby, controls the entire hybrid system, i.e., the charging/discharging state of battery 70 as well as the operation states of engine 10, first MG 20 and second MG 30, such that vehicle 1 can travel in the most efficient way.

ECU 200 calculates requested driving power corresponding to an amount of pressing the accelerator pedal (not shown) provided at the driver's seat. In accordance with the requested driving power thus calculated, ECU 200 controls torque of first MG 20 and second MG 30 as well as output of engine 10.

In vehicle 1 having the aforementioned configuration, when vehicle 1 starts moving, when vehicle 1 travels at low speed or the like and when the efficiency of engine 10 is bad, vehicle 1 travels by using only second MG 30. At the time of normal traveling, the motive power of engine 10 is divided into the two paths by power split device 40, for example. The motive power in one path is used to directly drive driving wheel 80. The motive power in the other path is used to drive first MG 20 to generate electric power. At this time, ECU 200 drives second MG 30 by using the generated electric power. By driving second MG 30 as described above, driving of driving wheel 80 is assisted.

During deceleration of vehicle 1, second MG 30 that is driven by rotation of driving wheel 80 functions as a generator to perform regenerative braking. The electric power recovered by regenerative braking is stored in battery 70. When the remaining capacity (in the following description, referred to as "SOC (State of Charge)) of the power storage device decreases and charging is particularly needed, ECU 200 increases the output of engine 10 and increases an amount of electric power generated by first MG 20. As a result, the SOC of battery 70 is increased. Even during low-speed traveling, ECU 200 may, in some cases, execute control for increasing the driving power from engine 10 as needed. Examples of the cases include the case in which charging of battery 70 is needed as described above, the case in which auxiliary machinery such as an air-conditioning device is driven, the case in which cooling water temperature Tw of engine 10 is raised to a prescribed temperature, and the other cases.

When controlling an amount of charging and an amount of discharging of battery 70, ECU 200 sets input power (in the following description, referred to as "charging power upper limit value Win") that is allowed at the time of charging battery 70 as well as output power (in the following description, referred to as "discharging power upper limit value Wout") that is allowed at the time of discharging battery 70, based on battery temperature TB and the current SOC. For example, when the current SOC decreases, discharging power upper limit value Wout is set to become lower gradually. On the other hand, when the current SOC increases, charging power upper limit value Win is set to become lower gradually.

The secondary battery used as battery 70 has such temperature dependence that an internal resistance increases at low temperature. At high temperature, it is necessary to prevent excessive temperature increase caused by further heat generation. Therefore, when battery temperature TB is low or when battery temperature TB is high, it is preferable to decrease discharging power upper limit value Wout and charging power upper limit value Win. By using a map and the like, for example, ECU 200 sets charging power upper limit value Win and discharging power upper limit value Wout in accordance with battery temperature TB and the current SOC.

Based on the state of vehicle 1, ECU 200 executes automatic stop control and automatic start control of engine 10. Depending on the operating state of vehicle 1 and the state of battery 70, ECU 200 automatically stops engine 10 in order to enhance the fuel efficiency. Even after engine 10 is stopped, ECU 200 restarts engine 10 depending on the operating state of vehicle 1 and the state of battery 70.

Specifically, when an automatic stop permission condition about the state of vehicle 1 is satisfied, ECU 200 permits execution of the automatic stop control of engine 10. When the automatic stop permission condition is not satisfied, ECU 200 prohibits execution of the automatic stop control. When execution of the automatic stop control is prohibited and when engine 10 is in the stop state or a stop operation of engine 10 is in execution, ECU 200 restarts engine 10.

The automatic stop permission condition includes, for example, at least any one of requested power for vehicle 1, battery temperature TB of battery 70, the SOC of battery 70, whether battery 70 is degraded or not, cooling water temperature Tw of engine 10, a temperature of a three-way catalytic converter of engine 10, vehicle speed V, and whether a request for actuating the air-conditioning device is made or not.

The condition about the requested power for vehicle 1 is the condition that requested power Pv for vehicle 1 based on amount of stroke AP of accelerator pedal 162 is equal to or lower than an upper limit value of power Pm that can be outputted by second MG 30.

The condition about battery temperature TB of battery 70 is, for example, the condition that battery temperature TB is higher than a threshold value TB(0). The condition about the SOC of battery 70 is, for example, the condition that the SOC is higher than a threshold value SOC(0). The condition about the cooling water temperature of engine 10 is, for example, the condition that engine 10 is in the warm-up completion state where cooling water temperature Tw is higher than a threshold value Tw(0).

The condition about the temperature of the three-way catalytic converter of engine 10 is the condition that engine 10 is in the warm-up completion state where the temperature of the three-way catalytic converter is higher than a threshold value. The temperature of the three-way catalytic converter may be directly detected using a sensor, or may be estimated based on an exhaust gas temperature or an amount of intake air.

The condition about vehicle speed V is the condition that vehicle speed V is lower than a threshold value V(0) for preventing excessive rotation of first MG 20. The condition about whether the request for actuating the air-conditioning device is made or not is, for example, the condition that the request for actuating the air-conditioning device (e.g., a heater, an air conditioner compressor and the like) is not made.

Each threshold value used in each of the aforementioned conditions is set based on the viewpoint of ensuring electric power that allows vehicle 1 to travel by using only second MG 30 with engine 10 stopped as well as electric power that allows engine 10 to start by using first MG 20, the viewpoint of suppressing progress of degradation of battery 70, or the like.

The aforementioned conditions are merely one example and the automatic stop permission condition is not limited to the aforementioned conditions. The automatic permission condition may include conditions other than the aforementioned conditions.

When the aforementioned automatic stop condition is satisfied, ECU 200 permits the automatic stop control. In other words, when engine 10 is in the actuated state, ECU 200 stops engine 10. For example, ECU 200 stops actuation of engine 10 by stopping fuel injection to engine 10. Alternatively, ECU 200 decreases engine rotation speed Ne to zero by using first MG 20. When engine 10 is in the stop state, ECU 200 maintains the stop state of engine 10.

On the other hand, when the aforementioned automatic stop condition is not satisfied, ECU 200 prohibits the automatic stop control. In other words, when engine 10 is in the actuated state, ECU 200 maintains the actuation state of engine 10 and does not stop engine 10. When engine 10 is in the stop state or when the stop operation due to the automatic stop control is in execution, ECU 200 executes the start operation of engine 10.

When engine 10 is in the complete stop state, for example, ECU 200 executes the start operation by cranking engine 10 using first MG 20. ECU 200 resumes fuel injection, together with cranking using first MG 20. Before engine 10 is stopped and when engine rotation speed Ne is higher than a rotation speed that allows complete explosion, for example, ECU 200 executes the start operation by resuming fuel injection, without cranking engine 10 using first MG 20. During the start operation, ECU 200 executes control of the opening degree of a throttle valve 110 and ignition control, and sets engine rotation speed Ne to be equal to or higher than a target rotation speed (e.g., idle rotation speed).

In vehicle 1 having the aforementioned configuration, when engine 10 is restarted and when engine rotation speed Ne is within a resonance occurrence region of drive device 2, vibrations produced by resonance may be transmitted to the occupant of the vehicle at the time of beginning the start control of the engine.

Thus, the present embodiment is characterized in that ECU 200 prevents restart of engine 10 when a restart request for restarting engine 10 is made during the stop operation of engine 10 and when engine rotation speed Ne is within a predetermined range based on the resonance occurrence region of drive device 2, and ECU 200 executes the start operation when the restart request is made during the stop operation and when engine rotation speed Ne is outside the predetermined range.

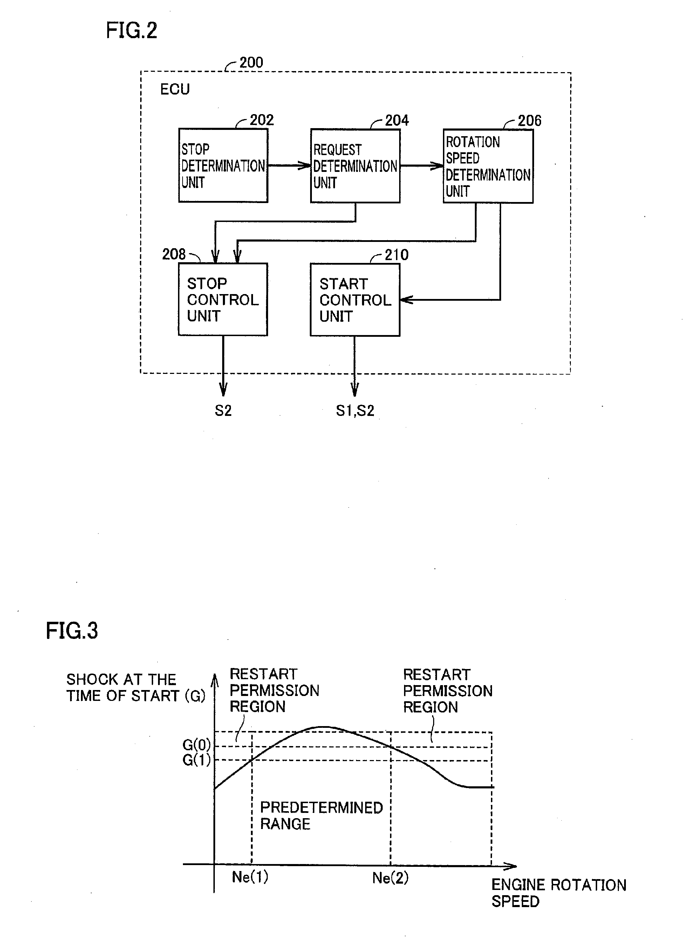

Fig. 2 shows a functional block diagram of ECU 200 mounted on vehicle 1 according to the present embodiment. ECU 200 includes a stop determination unit 202, a request determination unit 204, a rotation speed determination unit 206, a stop control unit 208, and a start control unit 210.

Stop determination unit 202 determines whether the stop operation of engine 10 is in execution or not. When the automatic stop control is in execution and when engine rotation speed Ne is larger than a threshold value Ne(0), stop determination unit 202 determines that the stop operation of engine 10 is in execution.

The automatic stop control being in execution refers to a state in which the automatic stop permission condition of engine 10 is satisfied, and thereby, fuel injection is stopped and engine rotation speed Ne is decreased by using first MG 20. For example, when the aforementioned automatic stop permission condition is satisfied, stop determination unit 202 may determine that the automatic stop control is in execution. Threshold value Ne(0) is a value for determining whether engine 10 is rotating or not, and is zero, for example.

For example, when stop determination unit 202 determines that the stop operation of engine 10 is in execution, stop determination unit 202 may turn on a stop determination flag.

When stop determination unit 202 determines that the stop operation of engine 10 is in execution, request determination unit 204 determines whether the restart request for restarting engine 10 is made or not. Specifically, when the aforementioned automatic stop permission condition is not satisfied, request determination unit 204 determines that the restart request for restarting engine 10 is made. For example, when the stop determination flag is ON, request determination unit 204 may determine whether the restart request for restarting engine 10 is made or not, and when the restart request is made, request determination unit 204 may turn on a restart determination flag.

Rotation speed determination unit 206 determines whether engine rotation speed Ne is within the predetermined range or not. The predetermined range is a range defined based on the resonance occurrence region of drive device 2. The resonance occurrence region of drive device 2 is a region of a rotation speed lower than engine rotation speed Ne at the time of idling.

Specifically, the predetermined range is a range formed by moving at least one of an upper limit value and a lower limit value of the resonance occurrence region of drive device 2 in a direction of increase in engine rotation speed Ne by a predetermined amount. The predetermined amount is, for example, an amount defined in consideration of a response delay time from when the start operation of the engine is begun to when decrease in engine rotation speed Ne is suppressed. The predetermined range may be, for example, a range including the resonance occurrence region. The predetermined range may be a range wider than the resonance occurrence region. Alternatively, the predetermined range may have a lower limit value common to that of the resonance occurrence region and an upper limit value larger than that of the resonance occurrence region. For example, when engine rotation speed Ne is within the predetermined range, rotation speed determination unit 206 may turn on a rotation speed determination flag.

Fig. 3 shows a relationship between engine rotation speed Ne and the degree of shock that occurs at the time of start. The vertical axis in Fig. 3 indicates the degree of shock that occurs at the time of starting engine 10. The horizontal axis in Fig. 3 indicates engine rotation speed Ne.

In Fig. 3, the predetermined range is a region of engine rotation speed Ne having a lower limit value of Ne(1) and an upper limit value of Ne(2). A region which is defined in consideration of the aforementioned response delay time and in which the degree of shock that occurs at the time of start is higher than a threshold value (e.g., G(1)) is, for example, set as the predetermined range. The shock that occurs at the time of start refers herein to the shock caused by rotation fluctuations that occur when engine rotation speed Ne is increased by using first MG 20.

In addition, in Fig. 3, a region outside the predetermined range, i.e., a first region in which engine rotation speed Ne is lower than Ne(1) and a second region in which engine rotation speed Ne is higher than Ne(2), is set as a region in which restart of engine 10 is permitted.

When request determination unit 204 determines that the restart request is not made, or when request determination unit 204 determines that the restart request is made and when rotation speed determination unit 206 determines that engine rotation speed Ne is within the predetermined range, stop control unit 208 prevents execution of the start operation of engine 10 and continues the stop operation.

When request determination unit 204 determines that the restart request is not made, or when request determination unit 204 determines that the restart request is made and when rotation speed determination unit 206 determines that engine rotation speed Ne is within the predetermined range, stop control unit 208 may also prohibit or delay the start operation of engine 10.

For example, when a restart request flag is ON and when the rotation speed determination flag is ON, stop control unit 208 may prevent execution of the start operation of engine 10 and continue the stop operation.

When request determination unit 204 determines that the restart request is made and when rotation speed determination unit 206 determines that engine rotation speed Ne is outside the predetermined range, start control unit 210 executes the start operation of engine 10, i.e., executes the start control.

As the start operation, start control unit 210 cranks engine 10 for increasing engine rotation speed Ne by using first MG 20. Alternatively, as the start operation, start control unit 210 resumes fuel injection by using fuel injection device 104.

For example, when engine rotation speed Ne is within a rotation speed region in which cranking using first MG 20 is needed, start control unit 210 may execute the start operation of engine 10 by increasing engine rotation speed Ne to the rotation speed that allows complete explosion by using first MG 20, and resuming fuel injection by using fuel injection device 104.

For example, when engine rotation speed Ne is higher than the rotation speed region in which cranking using first MG 20 is needed, start control unit 210 may execute the start operation of engine 10 by resuming fuel injection by using fuel injection device 104 without cranking.

For example, when the restart determination flag is ON and when the rotation speed determination flag is OFF, start control unit 210 may execute the start operation of engine 10.

In the present embodiment, stop determination unit 202, request determination unit 204, rotation speed determination unit 206, stop control unit 208, and start control unit 210 are each described as functioning as software implemented by a CPU of ECU 200 executing a program stored in a memory, they may be implemented by hardware. Such a program is recorded in a storage medium and mounted on vehicle 1.

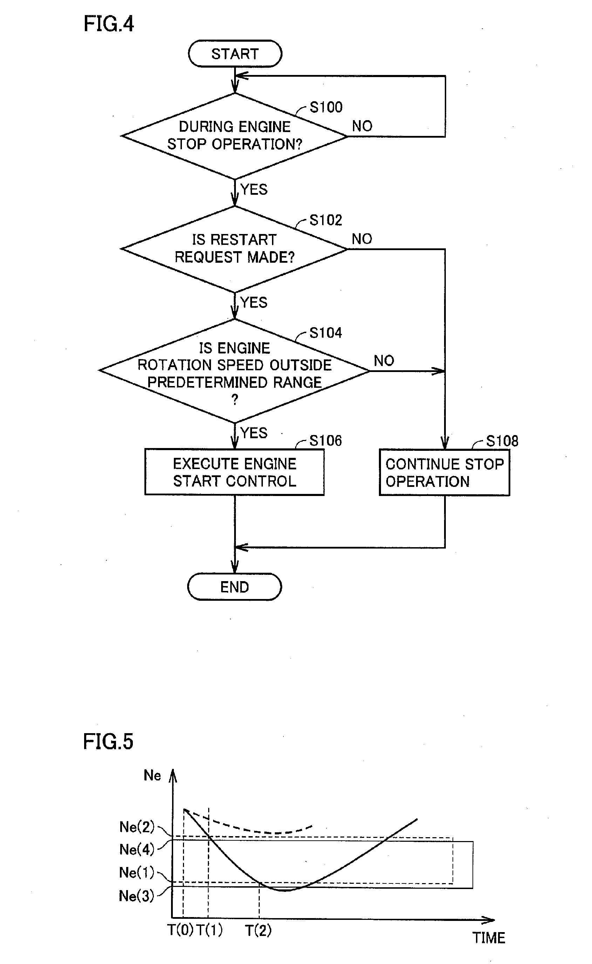

A control structure of a program executed by ECU 200 mounted on the vehicle according to the present embodiment will be described with reference to Fig. 4.

In step (hereinafter referred to as "S") 100, ECU 200 determines whether the stop operation of engine 10 is in execution or not. If the stop operation of engine 10 is in execution (YES in S100), the process proceeds to S102. If not (NO in S100), the process returns to S100.

In S102, ECU 200 determines whether the restart request for restarting engine 10 is made or not. If the restart request for restarting engine 10 is made (YES in S102), the process proceeds to S104. If not (NO in S102), the process proceeds to S108.

In S104, ECU 200 determines whether engine rotation speed Ne is outside the predetermined range or not. If engine rotation speed Ne is outside the predetermined range (YES in S104), the process proceeds to S106. If not (NO in S104), the process proceeds to S108.

In S106, ECU 200 executes the start control of engine 10. In S108, ECU 200 delays the start operation of engine 10 and continues the stop operation.

The operation of ECU 200 mounted on vehicle 1 according to the present embodiment based on the aforementioned structure and flowchart will be described with reference to Fig. 5.

In Fig. 5, the predetermined range is a region between engine rotation speeds Ne(1) and Ne(2). In addition, in Fig. 5, the resonance occurrence region is a region between engine rotation speeds Ne(3) and Ne(4).

It is assumed, for example, that the automatic stop condition of engine 10 is satisfied at time T(0). At this time, fuel injection to engine 10 is stopped and engine rotation speed Ne is decreased by using first MG 20 (YES in S100).

It is assumed, for example, that the driver increases amount of stroke AP of accelerator pedal 162 at time T(1) such that power Pv required for vehicle 1 exceeds the upper limit value of power Pm that can be outputted by using second MG 30.

In the case where engine rotation speed Ne changes as shown by the broken line in Fig. 5, the automatic stop condition of engine 10 enters the unsatisfied state at time T(1). When the restart request for restarting engine 10 is made (YES in S102), the start operation of engine 10 is executed (S106) because engine rotation speed Ne is outside the predetermined range (YES in S104). For example, fuel injection is resumed, and thereby, engine rotation speed Ne increases toward the target rotation speed. Therefore, engine rotation speed Ne does not enter the resonance occurrence region and engine 10 is started.

On the other hand, in the case where engine rotation speed Ne changes as shown by the solid line in Fig. 5, the automatic stop condition of engine 10 enters the unsatisfied state at time T(1). When the restart request for restarting engine 10 is made (YES in S102), the stop operation is continued (S108) because engine rotation speed Ne is within the predetermined range (NO in S104). Therefore, engine rotation speed Ne decreases with the passage of time.

When engine rotation speed Ne goes outside the predetermined range at time T(2) (YES in S104), the start operation of engine 10 is executed (S106). For example, by cranking using first MG 20, engine rotation speed Ne is increased to a rotation speed higher than the rotation speed that allows complete explosion. Thereafter, the throttle opening degree control, the fuel injection control, the ignition control and the like are executed and engine 10 is started.

Engine rotation speed Ne passes through the resonance occurrence region by the stop operation, and thereafter, passes again through the resonance occurrence region by the start operation, and engine 10 is started. This prevents engine rotation speed Ne from entering the resonance occurrence region during a period of shift from decrease to increase in engine rotation speed Ne due to start of the engine. As a result, a period in which engine rotation speed Ne is within the resonance occurrence region can be shortened as compared with the case in which engine 10 is started when engine rotation speed Ne is within the resonance occurrence region.

As described above, in vehicle 1 according to the present embodiment, restart of engine 10 is prevented when the restart request for restarting engine 10 is made during the stop operation of engine 10 and when engine rotation speed Ne is within the predetermined range based on the resonance occurrence region of drive device 2. The start operation is executed when the restart request for restarting engine 10 is made during the stop operation of engine 10 and when engine rotation speed Ne is outside the predetermined range. As a result, production of vibrations caused by resonance can be suppressed at the time of restarting the engine. Therefore, there can be provided a vehicle and a control method for a vehicle, which suppress transmission of vibrations produced by resonance to the driver at the time of restarting an engine.

Although Fig. 1 shows vehicle 1 having driving wheel 80 as a front wheel by way of example, the present invention is not particularly limited to such a driving system. Vehicle 1 may be, for example, a vehicle having the driving wheel as a rear wheel. Alternatively, vehicle 1 may be a vehicle in which second MG 30 in Fig. 1 is coupled to a drive shaft for driving the rear wheel instead of drive shaft 16 of the front wheel. Alternatively, a transmission mechanism may be provided between drive shaft 16 and speed reducer 58 or between drive shaft 16 and second MG 30.

Furthermore, the type of the hybrid vehicle to which the present invention is applied is not limited to the type shown in Fig. 1. The present invention may be applied, for example, to a series-type or parallel-type hybrid vehicle. Vehicle 1 may be configured, for example, such that second MG 30 is omitted, the rotation shaft of first MG 20 is directly coupled to the output shaft of engine 10, and a transmission having a clutch is provided instead of power split device 40.

Moreover, the vehicle to which the present invention is applied is not limited to the hybrid vehicle. The present invention may be applied, for example, to a vehicle having only an engine as a driving source.

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 vehicle; 2 drive device; 10 engine; 11 engine rotation speed sensor; 12, 13 resolver; 14 wheel speed sensor; 16 drive shaft; 40 power split device; 50 sun gear; 52 pinion gear; 54 carrier; 56 ring gear; 58 speed reducer; 60 PCU; 70 battery; 80 driving wheel; 102 cylinder; 104 fuel injection device; 110 throttle valve; 150 start switch; 156 battery temperature sensor; 158 current sensor; 160 voltage sensor; 162 accelerator pedal; 164 pedal stroke sensor; 166 water temperature sensor; 200 ECU; 202 stop determination unit; 204 request determination unit; 206 rotation speed determination unit; 208 stop control unit; 210 start control unit.

## Claims

1. A vehicle, comprising:
a drive device (2) including an engine (10); and
a control device (200) for executing a start operation of said engine, wherein
said control device prevents restart of said engine when a restart request for restarting said engine is made during a stop operation of said engine and when a rotation speed of said engine is within a predetermined range based on a resonance occurrence region of said drive device, and said control device executes said start operation when said restart request is made during said stop operation and when said rotation speed is outside said predetermined range.

2. The vehicle according to claim 1, wherein
said predetermined range is a range formed by moving at least one of an upper limit value and a lower limit value of said resonance occurrence region in a direction of increase in said rotation speed by a predetermined amount.

3. The vehicle according to claim 2, wherein
said predetermined amount is an amount defined in consideration of a response delay time from when said start operation is begun to when decrease in said rotation speed is suppressed.

4. The vehicle according to claim 1, further comprising
a rotating electric machine (20) for starting said engine, wherein
said control device executes said start operation by cranking said engine using said rotating electric machine, when said restart request is made during said stop operation and when said rotation speed is outside said predetermined range.

5. The vehicle according to claim 1, wherein
said engine is provided with a fuel injection device (104), and
said control device executes said start operation by controlling said fuel injection device to resume fuel injection, when said restart request is made during said stop operation and when said rotation speed is outside said predetermined range.

6. The vehicle according to claim 1, further comprising:
a first rotating electric machine (20);
a second rotating electric machine (30) coupled to a driving wheel (80); and
a power transmission device (40) mechanically coupling three elements, which are an output shaft of said engine, a first rotation shaft of said first rotating electric machine and a second rotation shaft of said second rotating electric machine, said power transmission device utilizing any one of said three elements as a reaction force element, thereby allowing for transmission of motive power between the other two elements.

7. The vehicle according to claim 6, wherein
said power transmission device is a planetary gear mechanism having a sun gear (50), a pinion gear (52), a carrier (54), and a ring gear (56),
said sun gear is coupled to said first rotation shaft,
said carrier is coupled to said output shaft of said engine, and
said ring gear is coupled to said second rotation shaft.

8. A control method for a vehicle, used in a vehicle on which a drive device (2) including an engine (10) is mounted, the control method for a vehicle comprising the steps of:
preventing restart of said engine when a restart request for restarting said engine is made during a stop operation of said engine and when a rotation speed of said engine is within a predetermined range based on a resonance occurrence region of said drive device; and
executing a start operation of said engine when said restart request is made during said stop operation and when said rotation speed is outside said predetermined range.
